# EUROPÄISCHE PATENTSCHRIFT

(11) **EP 4 055 282 B1**
(45) Veröffentlichungstag und Bekanntmachung des Hinweises auf die Patenterteilung: **03.07.2024**
(21) Anmeldenummer: 20829791.1
(22) Anmeldetag: 06.11.2020
(51) Int. Cl.: F15B 15/14, B23K 26/21

(54) **KOLBENEINHEIT FÜR EINEN ARBEITSZYLINDER**
PISTON UNIT FOR WORKING CYLINDER
UNITÉ PISTON POUR UN VÉRIN

(30) Priorität: 08.11.2019 DE 202019004570 U
(43) Veröffentlichungstag der Anmeldung: 14.09.2022
(73) Patentinhaber: Bümach Engineering International B.V., 7826 TA Emmen (NL)
(72) Erfinder: BUETER, Josef, 49733 Haren/Altenberge (DE)
(74) Vertreter: Weihrauch, Frank
(86) Internationale Anmeldenummer: PCT/DE2020/000268
(87) Internationale Veröffentlichungsnummer: WO 2021/089070

(56) Entgegenhaltungen:
- EP-A1- 1 503 114
- WO-A1-2014/183835
- WO-A1-2016/058619

## Beschreibung

Die Erfindung betrifft eine aus einem Kolben und einer Kolbenstange gebildete Kolbeneinheit für einen Arbeitszylinder.

Aus dem Stand der Technik sind verschiedene Lösungen für eine Kopplung eines Kolbens mit einer Kolbenstange bekannt. Hierbei sind sowohl formschlüssige, kraftschlüssige als auch stoffschlüssige Kopplungen bekannt.

Formschlüssige und kraftschlüssige Kopplungen weisen in der Regel das Problem auf, dass Zusatzmaßnahmen erforderlich sind, um eine Lockerung der Kopplung von Kolben und Kolbenstange zu verhindern. Zudem besteht bei formschlüssigen Kopplungen in der Regel der Nachteil, dass durch Formabschnitte wie Nuten oder Gewinde, die in die Kolbenstange eingebracht werden, die Kolbenstange voll oder zumindest mit großen Wandungsdicken ausgebildet werden muss, um eine ausreichende Stabilität zu erhalten. Ferner können Kerbwirkungen nachteilig sein. Weiterhin besteht ein vergleichsweise hoher Fertigungsaufwand für die in der Regel spanende Bearbeitung von Kolbenstange und Kolben. Zudem ist es aufwändig, spielfreie formschlüssige Kopplungen bereitzustellen.

Weiterhin ist es dem Grunde nach bekannt, den Kolben und die Kolbenstange stoffschlüssig miteinander zu verbinden. Eine Lockerung kann so verhindert werden, bedingt aber andere Nachteile. Soweit dies durch ein Verkleben erfolgt, besteht der Nachteil einer vergleichsweise geringen Festigkeit und einer geringen Sicherheit gegen ein Versagen der Verbindung. Ein Verkleben ist somit nur in besonderen Anwendungsfällen möglich.

Insbesondere sind dem Grunde nach Schweißverbindungen bekannt, welche jedoch den Einsatz von speziell qualifiziertem Personal erfordern und aufwändig sind. Insbesondere besteht der Nachteil einer thermischen Belastung der Kopplungspartner, die zu Materialgefügeänderungen insbesondere der Kolbenstange führen können und somit zu dickwandige Kolbenstangen oder Kolbenstangen aus einem Vollmaterial erfordern. So wird beispielsweise in WO 2016/058619 A1 die Verschweißung mitttels eines Schweißstahls vorgeschlagen, der geneigt und mit seiner Einstrahlposition in zwei unterschiedlichen Ebenen beabstandet ist.

Die Aufgabe der Erfindung ist es, eine Kolbeneinheit für einen Arbeitszylinder aufzuzeigen, die durch eine Kopplung eines Kolbens und einer Kolbenstange ausgebildet wird, die kostengünstig herstellbar ist und eine besonders hohe Betriebssicherheit gewährleistet.

Die Aufgabe wird durch die im Patentanspruch 1 aufgeführten Merkmale gelöst. Bevorzugte Weiterbildungen ergeben sich aus den Unteransprüchen.

Erfindungsgemäß weist die Kolbeneinheit eines Arbeitszylinders einen Kolben und eine Kolbenstange auf. Hierbei bestehen Kolben und Kolbenstange besonders bevorzugt aus einem Stahl.

Bei der erfindungsgemäßen Kolbeneinheit kann es sich insbesondere um eine Kolbeneinheit eines Differenzialzylinders, eines Gleichgangzylinders oder auch anderer Arbeitszylinderarten wie beispielsweise eines Pneumatikzylinders oder Zugzylinders handeln. Gleichfalls umfasst sind Kolbeneinheiten insbesondere von Speicherzylindern, hydraulischen Stoßdämpfern oder Gasferderzylindern, soweit diese einen mit einer Kolbenstange gekoppelten Kolben aufweisen.

Der Kolben weist erfindungsgemäß eine axiale Bohrung auf, in der die Kolbenstange aufgenommen ist.

Die axiale Bohrung im Kolben ist so ausgebildet, dass die Kolbenstange in ihr aufgenommen werden kann. Die axiale Bohrung besitzt vorzugsweise einen runden Querschnitt.

Die Kolbenstange und der Kolben sind erfindungsgemäß mittels zwei umlaufenden Laserringschweißnähte stoffschlüssig verbunden.

Jede Laserringschweißnaht ist insbesondere dadurch gekennzeichnet, dass durch das Laserschweißen vorteilhaft eine besonders schmale, spitz zulaufende und im Wesentlichen V-förmige Schweißnaht ausgebildet wird. Die seitlichen Flanken der Laserschweißnaht bilden einen spitzen Schweißnahtwinkel von vorzugsweise weniger als 15 Grad und besonders bevorzugt von weniger als 10 Grad aus.

Die Laserringschweißnähte bilden erfindungsgemäß eine druckmitteldichte Dichtebene aus.

Die Laserringschweißnaht wird ohne Unterbrechung entlang der Kontaktfläche zwischen Kolben / Ausgleichslage und Kolbenstange Ausgleichslage angeordnet. Damit bildet sie eine dichte stoffschlüssige Verbindung, welche einen Durchtritt des Druckmediums verhindert, ohne dass hierfür zusätzlich Mittel wie etwa Dichtungen erforderlich sind.

Es wurde mit der erfindungsgemäßen Kolbeneinheit eine Lösung gefunden, die insbesondere folgende wesentliche Vorteile gegenüber dem Stand der Technik aufweist.

Ein erster Vorteil der so erzeugten Kolbeneinheit liegt in der hohen Präzision und Rundlaufgenauigkeit. Da lediglich eine geringe Energie zum Verschweißen pro Länge der Schweißnaht eingebracht werden muss (geringe Streckenenergie), treten wesentlich geringere thermische Spannungen auf, die zu einem Verziehen der Kolbenstange führen könnten.

Ein besonders wichtiger Vorteil besteht in der hohen Festigkeit. Die Laserringschweißnaht weist eine geringe Breite, aber trotzdem eine große Schweißnahttiefe auf. Durch die große Schweißnahttiefe wird eine große Fläche verschweißt, so dass bei gleicher mechanischer Spannung an der Laserringschweißnaht besonders hohe Kräfte übertragen werden können oder umgekehrt, dass bei gleichen Kräften geringere mechanische Spannungen an der Laserringschweißnaht auftreten.

Damit wird vorteilhaft zudem eine besonders hohe Betriebssicherheit erreicht, da wegen der geringen mechanischen Spannung eine besonders hohe Reserve bis zu einer Überlastung vorliegt. Insbesondere gegenüber den bei hydraulischen Arbeitszylindern typischerweise auftretenden dynamischen Belastungen mit häufigen Lastwechseln ist die Kopplung zuverlässig und langzeitstabil.

Zugleich zu der vergleichsweise großen Schweißnahttiefe liegt vorteilhaft eine geringe Breite der Schweißnaht vor. Durch die geringe Schweißnahtbreite wird das Material der Kopplungspartner lediglich oberflächennah thermisch belastet, was besonders in Bezug auf die Kolbenstange besonders vorteilhaft ist, da diese so kaum geschwächt oder thermisch verzogen wird.

Insgesamt weist jede Laserringschweißnaht zudem ein geringes Volumen auf, so dass der Gesamtwärmeeintrag gering ist. Durch den geringeren Wärmeeintrag kommt es zu keinen Verzunderungen am Material, welche sonst in einem weiteren Arbeitsschritt wieder entfernt werden müssten.

Insbesondere durch das überraschend erreichbare Zusammenwirken der beschriebenen Vorteile kann die Kolbenstange besonders materialsparend ausgebildet und damit eine Schonung von Rohstoffressourcen erreicht werden.

Weiterhin ist es vorteilhaft, dass keine zusätzlichen Mittel zur Abdichtung zwischen der Kolbenstange und dem Kolben vorgesehen werden müssen. Im Gegensatz zu Dichtringen unterliegt die druckmitteldichte Dichtebene durch die Laserringschweißnähte zwischen Kolbenstange / / Ausgleichslage und Kolben / Ausgleichslage zudem keinem Verschleiß.

Fertigungstechnisch besteht zudem der Vorteil einer hohen Geschwindigkeit der Laserverschweißung sowie infolge des geringen Energieeintrags der besonders geringen Zeit für eine Abkühlung bis zur Weiterbearbeitung.

Ein weiterer fertigungstechnischer Vorteil liegt darin, dass thermisch empfindliche Komponenten wie beispielsweise Führungen oder elastomere Dichtungen bereits vor der Laserverschweißung des Kolbens mit der Kolbenstange am Kolben montiert werden können.

Gemäß einer vorteilhaften Weiterbildung nach Anspruch 2 sind die Laserringschweißnähte auf einer Bodenseite stirnseitig und mit Schweißnahtmittelachsen parallel zu einer Hauptlängsachse der Kolbenstange angeordnet.

Die Schweißnahtmittelachsen sind parallel zur Hauptlängsachse der Kolbenstange und entlang der Kontaktflächen zwischen Kolben / Ausgleichslage und Kolbenstange / Ausgleichslage angeordnet.

Jede Schweißnahtmittelachse entspricht in dieser Weiterbildung dem Verlauf der Kontaktflächen der Kopplungspartner.

Verläuft der Laser genau entlang der Kontaktfläche, werden Kolben und Kolbenstange im Wesentlichen zu gleichen Teilen thermisch belastet und bei gleicher Materialgüte auch in einer symmetrischen Schweißnaht entlang der Schweißnahtmittelachse aufgeschmolzen.

Damit wird mit dieser Weiterbildung vorteilhaft besonders zuverlässig eine besonders großflächige Verbindung der Kontaktflächen bei gleichzeitig geringer thermischer Belastung der Kopplungspartner erreicht.

Diese Weiterbildung ist insbesondere dann vorteilhaft realisierbar, wenn entlang der Schweißnahtmittelachse und über den zu verbindenden Kontaktflächen ausreichender Bewegungsspielraum für den Laser vorhanden ist, wie dies insbesondere bei der Bodenseiten des Kolbens zutrifft.

Gemäß einer weiteren vorteilhaften Weiterbildung nach Anspruch 3 sind die Laserringschweißnähte auf einer Kolbenstangenseite kolbenstangenseitig und die Schweißnahtmittelachsen mit einem Neigungswinkel alpha von 2 bis 15 Grad geneigt zu der Hauptlängsachse angeordnet.

Um die Kolbenstangenseite verschweißen zu können, muss der Laser angestellt werden. Jede Schweißnahtmittelachse, welche auch gleichzeitig dem Einfallsweg des Lasers entspricht, schließt mit der Hauptlängsachse einen Neigungswinkel alpha ein.

Der Neigungswinkel alpha beträgt in dieser Weiterbildung zwischen 2 und 15 Grad, vorzugsweise 4 bis 8 Grad und besonders bevorzugt 5 Grad.

Um eine stärkere Verbindung zwischen Kolben / Ausgleichslage und Kolbenstange / Ausgleichslage zu errreichen, wird ein möglichst großer Schmelzbereich entlang der Kontaktfläche zwischen den beiden Kopplungspartnern angestrebt. Es wurde gefunden, dass durch den konischen Querschnitt der Laserringschweißnaht eine ausreichende Verschmelzung erreicht wird, wenn deren Randbereich entlang den Kontaktflächen verläuft. So ist der Neigungswinkel bevorzugt nicht größer als der halbe Schweißnahtwinkel der Laserringschweißnaht.

Der Vorteil dieser Weiterbildung liegt darin, dass auch bei geringeren Bewegungsspielräumen des Lasers, wie insbesondere entlang der Kolbenstange, eine Laserringschweißnaht mit großer wirksamer Schweißnahttiefe bereitgestellt werden kann.

Die Kolbeneinheit weist gemäß einer vorteilhaften Weiterbildung nach Anspruch 4 eine erste und eine zweite Anordnung auf.

Gemäß dieser vorteilhaften Weiterbildung ist die erste Anordnung auf der Bodenseite stirnseitig und mit den entsprechenden Schweißnahtmittelachsen parallel zu einer Hauptlängsachse der Kolbenstange und die zweite Anordnung auf der Kolbenstangenseite kolbenstangenseitig und mit den entsprechenden Schweißnahtmittelachsen mit einem Neigungswinkel alpha von 2 bis 15 Grad geneigt zu der Hauptlängsachse angeordnet. Der Neigungswinkel alpha der zweiten Laserringschweißnaht beträgt vorzugsweise 4 bis 8 Grad und besonders bevorzugt 5 Grad.

In dieser Weiterbildung werden beide zuvor beschriebenen vorteilhaften Weiterbildungen kombiniert.

In einer vorteilhaften Ausformung erstrecken sich die Schweißnahttiefen der ersten und zweiten Anordnung insgesamt über die gesamte Kontaktfläche zwischen Kolben / Ausgleichslage und Kolbenstange / Ausgleichslage, so dass die stoffschlüssige Verbindung zwischen Kolben / Ausgleichslage und Kolbenstange / Ausgleichslage die gesamte Kontaktfläche ausnutzt. Somit wird die maximale Belastbarkeit der Kopplung erreicht.

Es ist ebenfalls möglich, dass beide Laserringschweißnähte Kolben / Ausgleichslage und Kolbenstange / Ausgleichslage nur teilweise entlang der Kontaktfläche verbinden. Die axialen Kraftübertragungen über die beiden so gebildeten Ringflächen der beiden Laserringschweißnähte ergänzen sich und stellen ebenfalls eine besonders hohe Belastbarkeit der Verbindung bereit. Hierbei ist der Wärmeeintrag geringer als bei einer durchgängig verschweißten Kontaktfläche.

Gemäß einer weiteren vorteilhaften Weiterbildung nach Anspruch 5 ist die Kolbeneinheit als Kolbeneinheit eines Gleichgangzylinders ausgebildet.

Die Kolbeneinheit eines Gleichgangszylinders ist so ausgebildet, dass der Kolben mittig auf der Kolbenstange fixiert wird. Die Kolbenstange wird dabei komplett durch den Kolben geführt und überragt diesen beidseitig axial.

Der Kolben weist gemäß dieser vorteilhaften Weiterbildung eine erste und eine zweite Kolbenstangenseite auf. Aufgrund der speziellen Bauform des Gleichgangzylinders besitzt der Kolben keine Bodenseite und statt dessen zwei Kolbenstangenseiten.

Gemäß der vorteilhaften Weiterbildung weist die Kolbeneinheit eine erste und eine zweite Anordnung auf, wobei die Anordnungen gegenüberliegend angeordnet sind.

Die erste und die zweite Anordnung sind gemäß dieser vorteilhaften Weiterbildung jeweils auf einer Kolbenstangenseite kolbenstangenseitig und mit den entsprechenden Schweißnahtmittelachsen jeweils mit einem Winkel alpha von 2 bis 15 Grad geneigt zu der Hauptplängsachse angeordnet.

Da die Kolbenstange durch den Kolben verläuft, werden die Laserringschweißnähte mit einer um den Winkel alpha angeschrägten Schweißnahtmittelachse gezogen. Der Winkel alpha beträgt zwischen 2 und 15 Grad, vorzugsweise 4 bis 8 Grad und besonders bevorzugt 5 Grad.

So wird vorteilhaft für diese Kolbenbauform die optimale Verbindung zwischen Kolben / Ausgleichslage und Kolbenstange / Ausgleichslage geschaffen.

Erfindungsgemäß weist die Kolbenstange eine verchromte Außenmanteloberfläche auf.

Wegen der besonderen Belastungen werden Kolbenstangen häufig mit verchromter Außenmanteloberfläche ausgebildet. Hierbei werden die Kolbenstangen als Stangenmaterial verchromt bezogen, abgelängt und dann mit bereits verchromter Oberfläche weiter bearbeitet.

Hierbei besteht fertigungstechnisch das Problem, dass die verchromte Außenmanteloberfläche eine Verschweißung nach dem Stand der Technik praktisch nicht zulässt.

Es wurde gefunden, dass mittels der thermischen Einwirkung auf die verchromte Außenmanteloberfläche durch die Laserringschweißnaht eine solche Gefügeveränderung der Chromschicht bewirkt wird, dass sich diese zwischen dem Stahl des Kolbens und der Kolbenstange so strukturiert, dass eine hohe Mantelhaftreibung an den gegenüberliegenden Kontaktflächen, also zwischen der äußeren zylindrischen Mantelfläche der Kolbenstange und der inneren zylindrischen Mantelfläche des Kolbens erreicht wird. Diese stellt eine ausreichend hohe axiale Kraftübertragbarkeit zwischen Kolben und Kolbenstange bereit.

Der besondere Vorteil dieser Weiterbildung besteht darin, dass ein sonst erforderlicher Abtrag der verchromten Außenmanteloberfläche entfallen kann.

Erfindungsgemäß weist die verchromte Außenmanteloberfläche einen nicht verchromten querschnittgeminderten Ringabschnitt auf.

Hierzu ist in dem Ringabschnitt mittels eines spanenden Verfahrens, vorzugweise Schleifen oder Drehen, die Chromschicht entfernt. Es liegt dort ein die Kolbenstange umlaufender Ringabschnitt vor, dessen Querschnitt zumindest um die Dicke der abgetragenen Chromschicht gemindert ist.

Zwischen dem Kolben und dem querschnittgeminderten Ringabschnitt ist erfindungsgemäß die ringförmige Ausgleichslage angeordnet. Die Ausgleichslage gleicht die Differenz des Durchmessers zwischen dem nicht verchromten querschnittgeminderten Ringabschnitt und der übrigen Kolbenstange aus und kann die Differenz gegebenenfalls auch übersteigen. Hierzu kann die ringförmige Ausgleichslage, welche vorzugsweise aus mindestens einem Formkörper besteht, in den queschnittsgeminderten Ringabschnitt eingelegt und der Kolben darüber geschoben werden. Es ist auch möglich, die ringförmige Ausgleichslage als Schneidring einzubringen.

Erfindungsgemäß ist die Kolbenstange mit der ringförmigen Ausgleichslage durch eine radial innere Laserringschweißnaht und die ringförmige Ausgleichslage mit dem Kolben durch eine radial äußere Laserringschweißnaht verbunden. Hierzu ist das Material der ringförmigen Ausgleichslage sowohl an das Material des Kolbens als auch an das unter der verchromten Außenmanteloberfläche der Kolbenstange vorliegende Material so angepasst, dass eine Verschmelzung erfolgen kann.

So können vorteilhaft auch Komponenten einer Kolbeneinheit verschweißt werden, welche eine zusätzliche Oberflächenbehandlung wie eine Verchromung aufweisen.

Die Erfindung wird als Ausführungsbeispiel anhand von
Fig. 1 Nicht zur Erfindung gehörende Kolbeneinheit eines Arbeitszylinders (bodenseitige Verschweißung)
Fig. 2 Nicht zur Erfindung gehörende Kolbeneinheit eines Arbeitszylinders (kolbenstangenseitige Verschweißung)
Fig. 3 Nicht zur Erfindung gehörende Kolbeneinheit eines Arbeitszylinders (geschlossener Kolben)
Fig. 4 Nicht zur Erfindung gehörende Kolbeneinheit eines Arbeitszylinders (beidseitige Verschweißung)
Fig. 5 Nicht zur Erfindung gehörende Kolbeneinheit eines Gleichgangzylinders (beidseitige Verschweißung)
Fig. 6 Erfindungsgemäße Kolbeneinheit eines Arbeitszylinders (mit ringförmiger Ausgleichslage)
Fig. 7 Nicht zur Erfindung gehörende Kolbeneinheit mit gehärteter Kolbenoberfläche (Explosionsansicht)
Fig. 8 Nicht zur Erfindung gehörende Kolbeneinheit mit gehärteter Kolbenoberfläche (verschweißt) näher erläutert.

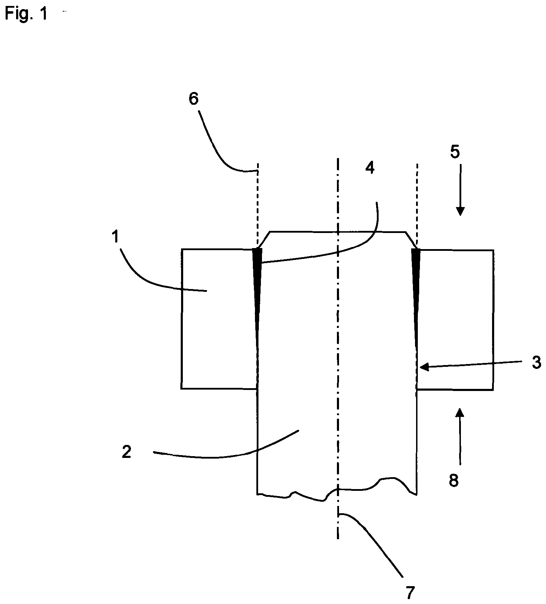

In Fig.1 ist ein erstes nicht zur Erfindung gehörendes Ausführungsbeispiel einer Kolbeneinheit eines Arbeitszylinders als schematischer Schnitt dargestellt. Die Kolbeneinheit weist einen Kolben 1 und eine Kolbenstange 2 auf. Der Kolben 1 besitzt eine axiale Bohrung 3, in welcher die Kolbenstange 2 aufgenommen ist. Er weist eine Bodenseite 5 und eine Kolbenstangenseite 8 auf.

Die Kolbeneinheit weist eine Laserringschweißnaht 4 auf, welche den Kolben 1 und die Kolbenstange 2 stoffschlüssig verbindet. Die Laserschweißnaht 4 ist auf der Bodenseite 5 angeordnet.

Dabei besitzt die Laserringschweißnaht 4 eine Schweißnahtmittelachse 6, welche mittig durch den Querschnitt der Laserringschweißnaht 4 verläuft.

Diese Schweißnahtmittelachse 6 verläuft parallel zu der Hauptmittelachse 7 der Kolbenstange 2 und entlang der korrespondierenden Kontaktflächen von Kolben 1 und Kolbenstange 2.

In dieser Ausführung wird von der Bodenseite 5 her mittels eines Laserschweißverfahrens verschweißt. Das Laserschweißen, bei welchem die Schweißnahtmittelachse 6 parallel zur Hauptlängsachse 7 verläuft, ist aufgrund der erforderlichen Bewegungsfreiheit des Laseremitters an der Bodenseite möglich.

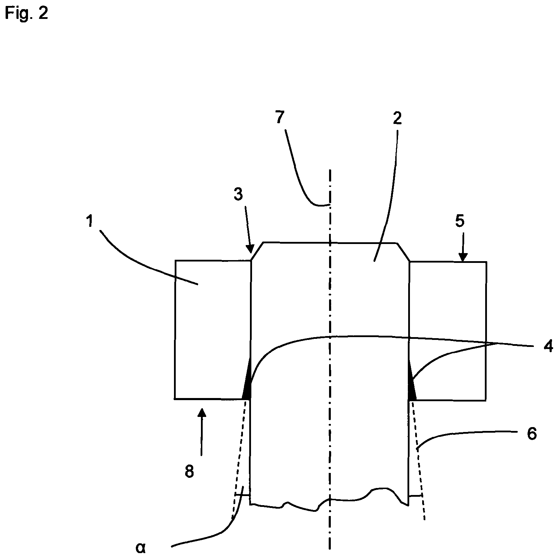

In Fig. 2 wird ein anderes nicht zur Erfindung gehörendes Ausführungsbeispiel einer Kolbeneinheit gezeigt, welche kolbenstangenseitig verschweißt ist. Die Laserringsschweißnaht 4 ist hier um einen Neigungswinkel α von 5 Grad geneigt. Im Übrigen ist die Kolbeneinheit gemäß Fig. 2 baugleich zu der in Fig. 1 dargestellten Kolbeneinheit.

Aufgrund der Kolbenstange 2 wird der Laser um den Neigungswinkel α gegenüber der Hauptlängsachse 7 der Kolbenstange 2 geneigt. Damit verläuft die Schweißnahtmittelachse 6, welche dem Verlauf des Laserstrahls entspricht, nicht wie in Fig. 1 parallel zur Hauptmittelachse 7 und schließt mit dieser den Neigungswinkel α ein.

In dieser Ausführung überschneidet sich der Randbereich der Laserringschweißnaht 4 mit den Kontaktflächen zwischen Kolben 1 und Kolbenstange 2, wodurch die Verbindung zwischen diesen erzeugt wird.

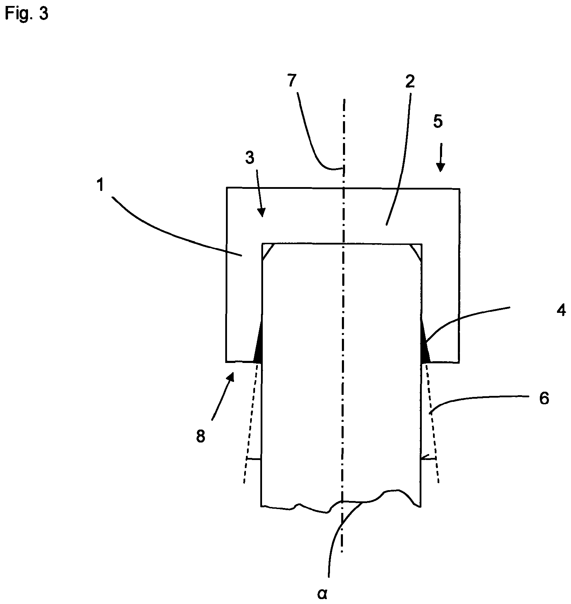

In Fig. 3 wird eine nicht zur Erfindung gehörende Kolbeneinheit mit einem geschlossenen Kolben 1 dargestellt. Im Gegensatz zu den vorangegangenen Kolbeneinheiten durchbricht die axiale Bohrung 3 den Kolben 1 nicht, sondern ist als Sacklochbohrung ausgebildet. Die Kolbenstange 2 ist hier nicht komplett durch den Kolben 1 geführt.

Die Laserringschweißnaht 4 ist analog zu Fig. 2 kolbenstangenseitig und mit angeschrägter Schweißnahtmittelachse 6 angeordnet, welche den Neigungswinkel α mit der Hauptmittelachse 7 einschließen. Der Neigungswinkel α beträgt auch hier 5 Grad.

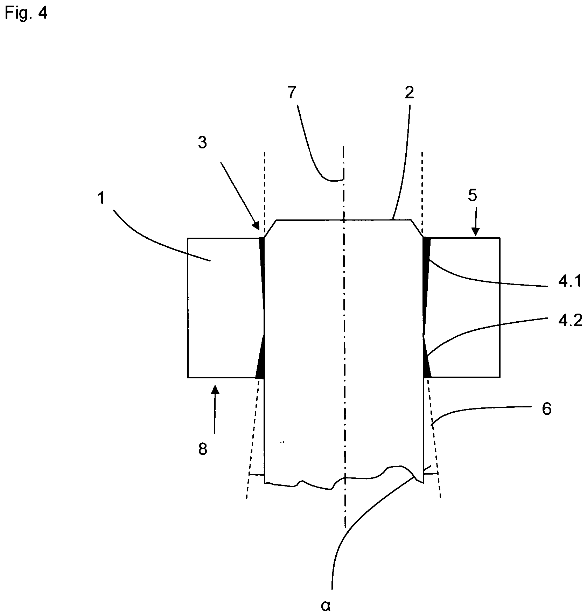

In Fig. 4 entspricht die Kolbeneinheit im Wesentlichen den Kolbeneinheiten aus Fig. 1 und Fig. 2.

In dieser nicht zur Erfindung gehörenden Ausführung wird die Verbindung von Kolben 1 und Kolbenstange 2 über eine erste Laserringschweißnaht 4.1 und eine zweite Laserringschweißnaht 4.2 ausgebildet.

Dabei entspricht die erste Laserringschweißnaht 4.1 der Laserringschweißnaht 4 aus Fig. 1 bei welcher die Schweißnahtmittelachse 6 parallel zur Hauptlängsachse 7 verläuft und welche von der Bodenseite 5 her verschweißt wird.

Die zweite Laserringschweißnaht 4.2 entspricht der Laserringschweißnaht 4 aus Fig. 2 und 3, in welcher die Schweißnahtmittelachse 6 den Neigungswinkel α mit der Hauptlängsachse 7 einschließt. Der Neigungswinkel α beträgt auch hier 5 Grad. Das Verschweißen erfolgt hier von der Kolbenstangenseite 8.

In dieser Ausführung berühren oder überlagern sich die erste Laserringschweißnaht 4.1 und die zweiten Laserringschweißnaht 4.2, wodurch eine Verbindung über die gesamte zylindrische Kontaktfläche von Kolben 1 und Kolbenstange 2 erfolgt. Somit wird eine höchste Belastbarkeit der Verbindung erreicht.

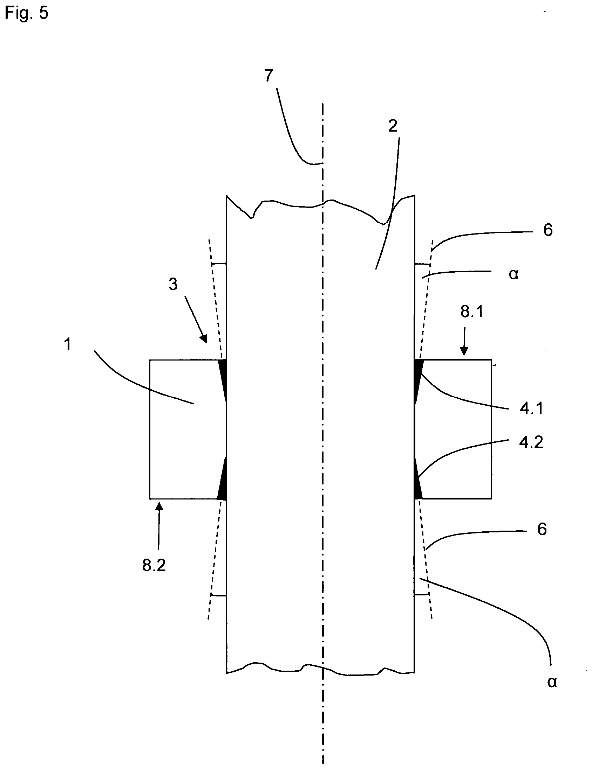

In Fig. 5 wird eine nicht zur Erfindung gehörende Kolbeneinheit eines Gleichgangzylinders dargestellt. Die Besonderheit des Gleichgangzylinders liegt darin, dass er aufgrund der durchgängigen Kolbenstange 2 keine Bodenseite 5 besitzt. Aus diesem Grund werden die beiden Seiten als erste Kolbenstangenseite 8.1 und zweite Kolbenstangenseite 8.2 definiert. In dieser Ausführung sind beide Kolbenstangenseiten 8.1, 8.2 gleich ausgebildet.

Im Unterschied zu den anderen Ausführungsbeispielen der Kolbeneinheiten werden sowohl die erste Laserringschweißnaht 4.1 als auch die zweite Laserringschweißnaht 4.2 zur Hauptlängsachse um den Neigungswinkel α angeschrägt. Der Neigungswinkel α beträgt auch hier 5 Grad.

Dabei wird die erste Laserringschweißnaht 4.1 von der ersten Kolbenstangenseite 8.1 her und die zweite Laserringschweißnaht 4.2 von der zweiten Kolbenstangenseite 8.2 her lasergeschweißt.

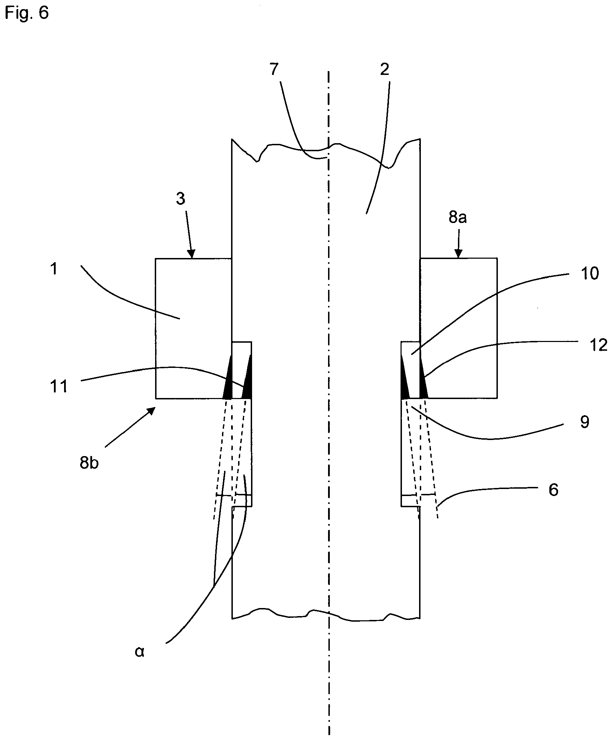

In Fig. 6 wird eine erfindungsgemäße Kolbeneinheit mit einer ringförmigen Ausgleichslage 10 dargestellt. In dieser Ausführung ist die Oberfläche der Kolbenstange 2 verchromt.

Die Oberfläche ist in einem Ringabschnitt 9 durch Abdrehen soweit abgetragen, dass sich ein querschnittsgeminderter Abschnitt bildet. Das Maß der Querschnittminderung ist in der Fig. 6 aus Gründen der Übersichtlichkeit überhöht dargestellt. In diesen querschnittsgeminderten Ringabschnitt 9 wird die ringförmige Ausgleichslage 10, welche in dieser Ausführung als segmentierte Stahlhülse ausgeführt ist, eingesetzt. Der Kolben 1 wird über die ringförmige Ausgleichslage 10 geschoben.

Die Kolbenstange 2 ist mittels der radial inneren Laserschweißnaht 11 mit der ringförmigen Ausgleichslage 10 verschweißt. Die ringförmige Ausgleichslage 10 ist stofflich homogen zu der Kolbenstange 2 unter der Chromschicht und zu dem Kolben 1 beschaffen. Die Schweißnahtmittelachse 6 ist hier um den Neigungswinkel α geneigt. Der Neigungswinkel α beträgt 5 Grad.

Der Kolben 1 ist mittels der radial äußeren Laserschweißnaht 12 mit der ringförmigen Ausgleichslage 10 verschweißt. Die Schweißnahtmittelachsen 6 der radial äußeren Laserschweißnaht und der radial inneren Laserschweißnaht 11 verlaufen parallel.

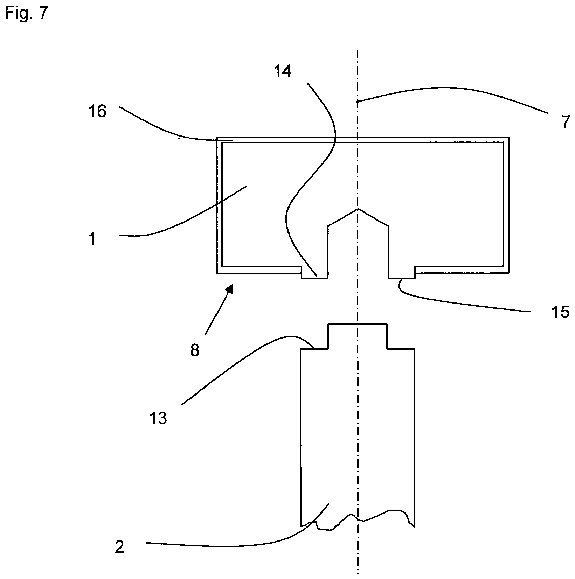

In Fig. 7 wird eine nicht zur Erfindung gehörende Kolbeneinheit mit einem Kolben 1 dargestellt, welcher eine gehärtete Oberfläche 16 besitzt.

Weiterhin besitzt der Kolben 1 einen flachzylindrischen Formabschnitt 14, welcher auf der Kolbenstangenseite 8 die übrige Kontur des Kolbens 1 etwas überragt. Die gehärtete Oberfläche ist im Bereich des flachzylindrischen Formabschnitts 14 durch Planschleifen von der axialen Gegenkontaktfläche 15 entfernt. In der Mitte des flachzylindrischen Formabschnitts 15 befindet sich eine Zentrierbohrung, welche mit einem Zentrierdorn in der Mitte der axialen Kontaktfläche 13 der Kolbenstange 2 korrespondiert.

So kann der Kolben 1 auf die Kolbenstange 2 aufgesetzt werden, womit beide in ihrer relativen radialen Position fixiert werden.

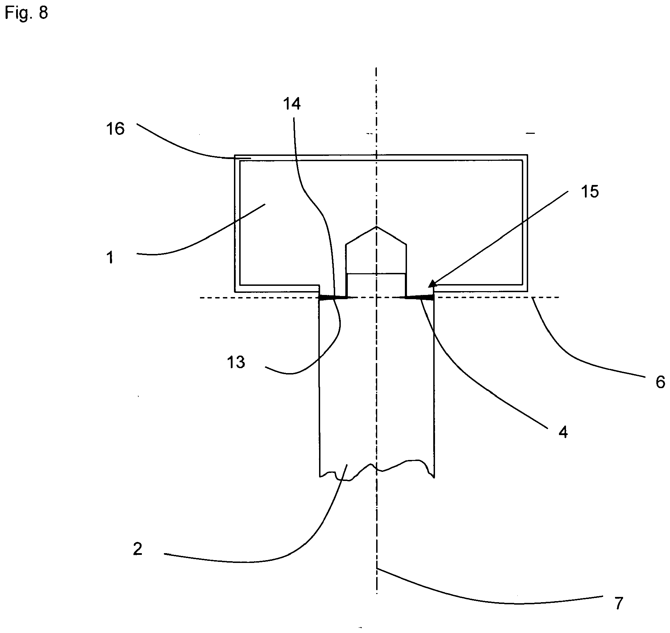

In Fig. 8 wird die fertig montierte Kolbeneinheit aus Fig. 7 dargestellt. Der Kolben 1 wurde axial auf die Kolbenstange 2 aufgesetzt, so dass Kontaktfläche 13 und Gegenkontaktfläche 14 im Berührungskontakt stehen. Der Zentrierdorn steht im Eingriff mit der Zentrierbohrung.

Der Kolben 1 und die Kolbenstange 2 sind entlang der korrespondierenden Kontaktflächen 13, 14 mittels der Laserringschweißnaht 4 verbunden.

Im Vergleich zu den vorher beschriebenen Kolbeneinheiten verläuft die Schweißnahtmittelachse 6 senkrecht zur Hauptlängsachse.

### Verwendete Bezugszeichen

- 1: Kolben
- 2: Kolbenstange
- 3: axiale Bohrung
- 4: Laserringschweißnaht
- 4.1: erste Laserringschweißnaht
- 4.2: zweite Laserringschweißnaht
- 5: Bodenseite
- 6: Schweißnahtmittelachse
- 7: Hauptlängsachse
- 8: Kolbenstangenseite
- 8.1: erste Kolbenstangenseite
- 8.2: zweite Kolbenstangenseite
- 9: querschnittsgeminderter Ringabschnitt
- 10: ringförmige Ausgleichslage
- 11: radial innere Laserschweißnaht
- 12: radial äußere Laserschweißnaht
- 13: axiale Kontaktfläche
- 14: flachzylindrischer Formabschnitt
- 15: axiale Gegenkontaktfläche
- 16: gehärtete Oberfläche
- α: Neigungswinkel alpha

## Patentansprüche

1. Kolbeneinheit für einen Arbeitszylinder aufweisend einen Kolben (1) und eine Kolbenstange (2),
wobei der Kolben eine axiale Bohrung (3) aufweist, in der die Kolbenstange (2) aufgenommen ist,
wobei die Kolbenstange (2) und der Kolben (3) mittels zwei umlaufenden Laserringschweißnähte stoffschlüssig verbunden sind,
wobei die Laserringschweißnähte eine druckmitteldichte Dichtebene ausbilden, **dadurch gekennzeichnet dass** die Kolbenstange (2) eine verchromte Außenmanteloberfläche aufweist,
dass die Außenmanteloberfläche einen nicht verchromten querschnittgeminderten Ringabschnitt (9) aufweist,
dass zwischen dem Kolben (1) und dem querschnittgeminderten Ringabschnitt (9) eine ringförmige Ausgleichslage (10) angeordnet ist und dass die Kolbenstange (2) mit der ringförmigen Ausgleichslage (10) durch eine radial innere Laserringschweißnaht (11) und die ringförmige Ausgleichslage (10) mit dem Kolben (1) durch eine radial äußere Laserringschweißnaht (12) verbunden ist.

2. Kolbeneinheit nach Anspruch 1,
**dadurch gekennzeichnet,**
**dass** die radial innere Laserringschweißnaht (11), die radial äußere Laserringschweißnaht (12) und die ringförmige Ausgleichslage (10) auf einer Bodenseite (5) stirnseitig angeordnet sind und jede Laserringschweißnaht eine parallel zu einer Hauptlängsachse (7) der Kolbenstange (2) angeordnete Schweißnahtmittelachse (6) aufweist, welche mittig durch den Querschnitt der jeweiligen Laserringschweißnaht verläuft.

3. Kolbeneinheit nach Anspruch 1, **dadurch gekennzeichnet, dass** die radial innere Laserringschweißnaht (11), die radial äußere Laserringschweißnaht (12) und die ringförmige Ausgleichslage (10) auf einer Kolbenstangenseite (8) kolbenstangenseitig angeordnet sind, wobei jede Laserringschweißnaht eine Schweißnahtmittelachse (6) aufweist, welche mittig durch den Querschnitt der jeweiligen Laserringschweißnaht verläuft, wobei jede Schweißnahtmittelachse (6) mit einem Schweißnahtneigungswinkel alpha von 2 bis 15 Grad geneigt zu der Hauptlängsachse (7) der Kolbenstange (2) angeordnet ist.

4. Kolbeneinheit nach Anspruch 1, **dadurch gekennzeichnet, dass** sie eine erste und eine zweite Anordnung aufweist, jede Anordnung bestehend aus der radial inneren Laserringschweißnaht (11), der radial äußeren Laserringschweißnaht (12) und der ringförmigen Ausgleichslage (10), wobei jede Laserringschweißnaht eine Schweißnahtmittelachse (6) aufweist, welche mittig durch den Querschnitt der jeweiligen Laserringschweißnaht verläuft, wobei die erste Anordnung auf der Bodenseite stirnseitig und mit den Schweißnahtmittelachsen (6) der Laserringschweißnähte der ersten Anordnung parallel zu einer Hauptlängsachse (7) der Kolbenstange (2) und die zweite Anordnung auf der Kolbenstangenseite(8) kolbenstangenseitig und mit den Schweißnahtmittelachsen (6) der Laserringschweißnähte der zweiten Anordnung mit einem Winkel alpha von 2 bis 15 Grad geneigt zu der Hauptlängsachse (7) angeordnet ist.

5. Kolbeneinheit nach Anspruch 1,
**dadurch gekennzeichnet,**
**dass** die Kolbeneinheit als Kolbeneinheit eines Gleichgangzylinders ausgebildet ist,
wobei der Kolben (1) eine erste Kolbenstangenseite (8.1) und eine zweite Kolbenstangenseite (8.2) aufweist,
wobei die Kolbeneinheit eine erste und eine zweite Anordnung aufweist, jede Anordnung bestehend aus der radial inneren Laserringschweißnaht (11), der radial äußeren Laserringschweißnaht (12) und der ringförmigen Ausgleichslage (10), wobei jede Laserringschweißnaht eine Schweißnahtmittelachse (6) aufweist, welche mittig durch den Querschnitt der jeweiligen Laserringschweißnaht verläuft,
wobei die erste und zweite Anordnung axial gegenüberliegend angeordnet sind,
wobei die erste Anordnung auf der ersten Kolbenstangenseite (8.1) und die zweite Anordnung auf der zweiten Kolbenstangenseite (8.2) jeweils kolbenstangenseitig angeordnet sind, wobei die Schweißnahtmittelachse (6) der Laserringschweißnähte jeweils mit einem Neigungswinkel alpha von 2 bis 15 Grad geneigt zu der Hauptlängsachse (7) angeordnet ist.

## Claims

1. A piston unit for a working cylinder,
comprising a piston (1) and a piston rod (2),
wherein the piston has an axial bore hole (3) in which the piston rod (2) is received,
wherein the piston rod (2) and the piston (1) are connected in a material-bonding manner by means of two circumferential laser ring weld seams, wherein the laser ring weld seams form a pressure medium-tight sealing plane,
**characterized in**
**that** the piston rod (2) has a chromium-plated outer lateral surface, that the outer lateral surface has a non-chromium-plated cross-sectionally reduced ring section (9),
**that** an annular compensation layer (10) is arranged between the piston (1) and the cross-sectionally reduced ring section (9), and
**that** the piston rod (2) is connected to the annular compensation layer (10) by a radial inner laser ring weld seam (11), and the annular compensation layer (10) is connected to the piston (1) by a radial outer laser ring weld seam (12).

2. The piston unit according to claim 1,
**characterized in**
**that** the radial inner ring weld seam (11), the radial outer ring weld seam (12) and the annular compensation layer (10) are arranged front-face-sided on a bottom side (5), and each ring weld seam has a weld seam centre axis (6) which is parallel to a main longitudinal axis (7) of the piston rod (2) and runs centrally through the cross-section of the respective laser ring weld seam.

3. The piston unit according to claim 1,
**characterized in**
**that** the radial inner laser ring weld seam (11), the radial outer weld seam (12) and the annular compensation layer (10) are arranged piston-rod-sided on a piston rod side (8), wherein each laser ring weld seam has a weld seam centre axis (6) which runs centrally through the cross-section of the respective laser ring weld seam, wherein each weld seam centre axis (6) is arranged inclined relative to the main longitudinal axis (7) of the piston rod (2) at a weld seam inclination angle alpha ranging between 2 and 15 degrees.

4. The piston unit according to claim 1,
**characterized in**
**that** it comprises a first and a second arrangement, each arrangement consists of the radial inner laser ring weld seam (11), the radial outer laser ring weld seam (12) and the annular compensation layer (10), wherein each laser ring weld seam has a weld seam centre axis (6) running centrally through the cross-section of the respective laser ring weld seam, wherein the first arrangement is provided front-face-sided on the bottom side (5) and with the weld seam centre axes (6) of the laser ring weld seams of the first arrangement being parallel to a main longitudinal axis (7) of the piston rod (2), and the second arrangement is provided piston-rod sided on the piston rod side (8) and with the weld seam centre axes (6) of the laser ring weld seams being inclined relative to the main longitudinal axis (7) at an inclination angle alpha ranging between 2 and 15 degrees.

5. The piston unit according to claim 1,
**characterized in**
**that** the piston unit is designed as a piston unit of a synchronized cylinder, wherein the piston (1) has a first piston rod side (8.1.) and a second piston rod side (8.2),
wherein the piston unit has a first and a second arrangement, and each arrangement consists of the radial inner laser ring weld seam (11), the radial outer laser ring weld seam (12) and the annular compensation layer (10), wherein each laser ring weld seam has a weld seam centre axis (6) which runs centrally through the cross-section of the respective laser ring weld seam,
wherein the first arrangement and the second arrangement are provided axially opposite to each other,
wherein the first arrangement is provided piston-rod sided on the first piston rod side (8.1) and the second arrangement is provided piston-rod sided on the second piston rod side (8.2), wherein each weld seam centre axis (6) of the laser ring weld seams is arranged inclined relative to the main longitudinal axis (7) at an inclination angle alpha ranging between 2 and 15 degrees.

## Revendications

1. Unité de piston pour un cylindre de travail
comprenant un piston (1) et une tige de piston (2),
où le piston présente un alésage axial (3) dans lequel est logée la tige de piston (2),
où la tige de piston (2) et le piston (3) sont reliés par une liaison de matière au moyen de deux soudures annulaires au laser (4),
où les soudures annulaires au laser (4) forment un plan d'étanchéité étanche aux fluides sous pression,
est **caractérisée en ce que** la tige de piston (2) présente une surface d'enveloppe extérieure chromée,
que la surface de l'enveloppe extérieure présente une section annulaire (9) à section réduite non chromée,
qu'une couche annulaire de compensation (10) est disposée entre le piston (1) et la section annulaire (9) à section réduite, et
que la tige de piston (2) est reliée à la couche annulaire de compensation (10) par un cordon de soudure annulaire au laser radialement intérieur (11) et la couche de compensation annulaire (10) est reliée au piston (1) par un cordon de soudure annulaire au laser radialement extérieur (12).

2. Unité de piston suivant la revendication 1
est **caractérisée en ce**
**que** le cordon de soudure annulaire au laser radialement intérieur (11), le cordon de soudure annulaire au laser radialement extérieur (12) et la couche de compensation annulaire (10) sont disposés de manière frontale sur un côté de fond (5) et chaque cordon de soudure annulaire au laser présente un axe central de cordon de soudure (6) disposé parallèlement à un axe longitudinal principal (7) de la tige de piston (2), lequel s'étend au milieu à travers la section transversale du cordon de soudure annulaire au laser respectif.

3. Unité de piston suivant la revendication 1
est **caractérisée en ce**
**que** le cordon de soudure annulaire au laser radialement intérieur (11), le cordon de soudure annulaire au laser radialement extérieur (12) et la couche de compensation annulaire (10) sont disposés sur un côté de tige de piston (8) du côté de la tige de piston, chaque cordon de soudure annulaire au laser présentant un axe central de cordon de soudure (6), qui s'étend au milieu de la section transversale du cordon de soudure annulaire au laser respectif, chaque axe central de cordon de soudure (6) étant disposé de manière inclinée par rapport à l'axe longitudinal principal (7) de la tige de piston (2) avec un angle d'inclinaison de cordon de soudure alpha de 2 à 15 degrés.

4. Unité de piston suivant la revendication 1
est **caractérisée en ce**
**qu'**elle présente une première et une deuxième disposition, chaque disposition étant constituée du cordon de soudure annulaire laser radialement intérieur (11), du cordon de soudure annulaire laser radialement extérieur (12) et de la couche de compensation annulaire (10), chaque cordon de soudure annulaire laser présentant un axe central de soudage (6) qui s'étend au milieu à travers la section transversale du cordon de soudure annulaire laser respectif, le premier disposition étant disposée sur le côté du fond du côté frontal et avec les axes centraux de soudure (6) des soudures annulaires au laser du premier disposition en parallèle à un axe longitudinal principal (7) de la tige de piston (2) et avec les axes centraux de soudure (6) des soudures annulaires au laser du deuxième disposition de façon inclinée d'un angle alpha de 2 à 15 degrés par rapport à l'axe longitudinal principal (7).

5. Unité de piston suivant la revendication 1
est **caractérisée en ce**
**que** l'unité de piston est réalisée sous la forme d'une unité de piston d'un cylindre à même vitesse,
où le piston (1) présente un premier côté de tige de piston (8.1) et un deuxième côté de tige de piston (8.2),
où l'unité de piston comprend une première et une seconde disposition, chaque disposition consistant en la soudure annulaire au laser radialement intérieure (11), la soudure annulaire au laser radialement extérieure (12) et la couche de compensation annulaire (10), chaque soudure annulaire au laser ayant un axe central de soudure (6) qui s'étend au milieu de la section transversale du cordon de soudure annulaire au laser respectif,
où la première et deuxième disposition sont disposées axialement de manière opposée,
où la première disposition est arrangée sur le premier côté de la tige de piston (8.1) et la deuxième disposition est arrangée sur le deuxième côté de la tige de piston (8.2), respectivement du côté de la tige de piston, l'axe central de soudure (6) des soudures annulaires au laser est disposé respectivement avec un angle d'inclinaison alpha de 2 à 15 degrés incliné par rapport à l'axe longitudinal principal (7).
